# EUROPEAN PATENT SPECIFICATION

(11) **EP 2 517 890 B1**
(45) Date of publication and mention of the grant of the patent: **15.05.2019**
(21) Application number: 10839497.4
(22) Date of filing: 22.12.2010
(51) Int. Cl.: B41M 5/00, B41M 5/50, B41M 5/52, C09D 11/00

(54) **RESIN FILM FOR ULTRAVIOLET-CURABLE INKJET PRINTING, AND PRINTED MATTER RESULTING FROM PRINTING BEING APPLIED TO SAID FILM**
HARZFILM FÜR ULTRAVIOLETTHÄRTBAREN TINTENSTRAHLDRUCK SOWIE AUS DER ANWENDUNG DES TINTENSTRAHLDRUCKS AUF DEN HARZFILM ENTSTANDENES BEDRUCKTES MATERIAL
FILM DE RÉSINE POUR IMPRESSION PAR JET D'ENCRE À SÉCHAGE SOUS UV, ET MATIÈRE IMPRIMÉE PRODUITE PAR L'APPLICATION D'UNE IMPRESSION SUR LEDIT FILM

(30) Priority: 22.12.2009 JP 2009290697
(43) Date of publication of application: 31.10.2012
(73) Proprietor: Yupo Corporation, Tokyo 101-0062 (JP)
(72) Inventor: YAMAMOTO, Mineko, Ibaraki 314-0102 (JP); IIDA, Seiichiro, Chiyoda-ku, Tokyo 101-0062 (JP)
(74) Representative: Zimmermann & Partner Patentanwälte mbB
(86) International application number: PCT/JP2010/073220
(87) International publication number: WO 2011/078267

(56) References cited:
- EP-A1- 1 279 697
- EP-A1- 1 486 529
- JP-A- 10 181 188
- JP-A- 11 138 975
- JP-A- 2004 216 890
- JP-A- 2004 268 479
- JP-A- 2005 007 675
- JP-A- 2009 221 410
- JP-A- 2009 263 603

## Description

### Technical Field

The present invention relates to a resin film for ultraviolet curable inkjet printing, and a printed matter having printing applied to the same.

Specifically, the invention relates to a resin film for ultraviolet curable inkjet printing, comprising a resin film having a porous printing layer, characterized in that the porous printing layer has a specific structure, and a coating layer is provided on the layer by treating with a specific surface treatment agent, the resin film being capable of achieving uniformly high ink adhesive force even though conducting various wide ultraviolet curing inkjet printings, and its printed matter having excellent water resistance.

### Background Art

In a large-sized printing field such as a signboard or a poster, the conventional screen printing method is moving into an inkjet printing method that does not require preparation of a printing plate and can conduct printing with various kinds of small lots. A printing apparatus using not only an aqueous or solvent type ink, but an ultraviolet curing ink is developed as such a large-sized inkjet printing apparatus.

In an aqueous inkjet printing, an ink comprising an aqueous medium having dispersed or dissolved therein a coloring component, a viscosity regulator, a clog inhibitor and the like is used. Therefore, in the case that the printed matter is wetted by water or under high humidity, bleeding and elution of an ink occur, and water resistance is liable to become insufficient. For this reason, as an outdoor display, it was necessary to use a medium to be printed, comprising a medium to be printed that does not collapse by water, having provided thereon a water-resistant ink-receiving layer having ink fixing performance which is very expensive (for example, Patent Document 1), or to apply overlaminate processing to the printed matter.

The solvent type inkjet printing uses an ink comprising a solvent containing an organic solvent, having dispersed or dissolved therein a coloring component, a viscosity regulator, a clog inhibitor and the like. Therefore, the printed matter has excellent water resistance as compared with a printed matter obtained by aqueous inkjet printing, but in fixing an ink to a medium to be printed, the medium to be printed must absorb a large amount of a solvent. As a result, an ink-receiving layer which is very expensive is required (for example, Patent Document 2), and drying facilities are frequently required at the time of printing, solvent recovery facilities are required for VOC countermeasure. Thus, both materials and facilities are expensive.

On the other hand, ultraviolet curable inkjet printing is that an ink used does not substantially contain a solvent. Therefore, the ink can be printed on a medium to be printed, having water resistance and less solvent absorption. Furthermore, the ink itself cures, and therefore, the printed matter can be posted outdoors without laminate.

The ultraviolet curable inkjet printing has the characteristic that the ink instantaneously cures by ultraviolet irradiation. Therefore, other than printing facilities, only ultraviolet irradiation facilities are essential, and the above-described large-scale drying facilities and solvent recovery facilities are not required. As a result, apparatuses and facilities can be simplified. Furthermore, because the ink instantaneously cures, retention time to a next step can be shortened.

By virtue of those advantages, an ultraviolet curable inkjet printer is launched on the market by various printer instrument makers, but various printing systems are employed.

For example, there are the following systems. A system in which both an inkjet nozzle and an ultraviolet irradiation apparatus move on a medium to be printed, an ink is cured just after printing on the medium to be printed, and those procedures are repeated to form an image; a system in which an ultraviolet irradiation apparatus is arranged in an entire width direction of a printing site, each color is printed on a medium to be printed, followed by ultraviolet irradiation, and this procedure is repeated several times to form an image; and all colors are printed on a medium to be printed, and ultraviolet irradiation is conducted only one time to form an image.

In the ultraviolet irradiation apparatus, high pressure, medium pressure and low pressure mercury lamps, a metal halide lamp, LED and the like are used.

There are various kinds in the ink used in ultraviolet curable inkjet printing. However, the characteristic of the ink for ultraviolet curable inkjet printing is that the ink is required to have marked low viscosity as compared with an ultraviolet curable ink used in other printing systems.

This requirement is due to that the inkjet printing system is a system that an ink is sprayed in a form of fine droplets, and stuck to a medium to be printed, thereby forming an image. To satisfy the viscosity standard, low viscosity monomer or oligomer called a reactive diluent is generally used in an ink for ultraviolet curable inkjet printing.

Regarding the ink for ultraviolet curable inkjet printing, an ink in which temperature of the ink at the time of formation of droplets is increased to decrease viscosity (for example, Patent Document 3), an ink to which a solvent is added in an extent of not affecting drying (for example, Patent Document 4), an ink in which a cationic polymerization type photopolymerization initiator, not a general radical polymerization type photopolymerization initiator, is used for the purpose of using a monomer or oligomer having a high safety, low odor and low viscosity is used (for example, Patent Document 5), an ink in which radical polymerization and cationic polymerization are co-used (for example, Patent Document 6), and an ink from which a polymerization initiator has been removed in order that the ink does not react and solidify in a tank (for example, Patent Document 7) are proposed.

As described above, the ultraviolet curable inkjet printing includes various systems in a printer and an ink, and there is difference in adhesiveness between an ink and a medium to be printed of those printed matters. Particularly, in the case of uses of signboards and posters that are posted outdoors, adhesiveness that an ink does not drop out when exposed to water is required. However, even in ultraviolet curable inkjet printing, when a medium to be printed that does not have an ink-receiving layer and does not have solvent absorbability is used, there was a possibility that ink peeling occurs in the case that the printed matter is continuously posted outdoors.

EP1279697 discloses a resin film for inkjet printing comprising a porous printing layer and a coating layer on the porous printing layer and the coating layer comprises a nitrogen-containing polymer which is an epichlorohydrin adduct of polyamine polyamide.

### Prior Art References

### Patent Document

Patent Document 1: JP-A 2004-181935
Patent Document 2: JP-A 2005-007675
Patent Document 3: JP-A 2004-067775
Patent Document 4: JP-A 2004-018716
Patent Document 5: JP-A 2004-091557
Patent Document 6: JP-T 2006-524731 (the term "JP-T" means a published Japanese translation of a PCT application)
Patent Document 7: JP-A 2004-059810

### Summary of the Invention

### Problems that the Invention is to Solve

The present invention has an object to provide a resin film for ultraviolet curing inkjet printing, in which an ink does not easily peel even in the case that the resin film is continuously posted outdoors, and a printed matter having been subjected to excellent water-resistant ultraviolet curable inkjet printing.

### Means for Solving the Problems

The present inventors noted that an ink for ultraviolet curable inkjet printing all has low viscosity, in more detail, an ink for ultraviolet curable inkjet printing all has low viscosity adjusted by a polymerizable monomer, and have found that when a surface of a resin film which is a medium to be printed is allowed to have a porous structure having micropores, and a coating layer is provided by treating with a surface treatment agent so as to have chemical affinity with those ink components, water resistance of a printed matter by the ink for ultraviolet curable inkjet printing is improved, and stability with the passage of time when used as a printed matter for outdoor display is drastically improved, leading to completion of the present invention.

Accordingly, the present invention relates to a resin film for ultraviolet curable inkjet printing, having the following constitutions, and a printed matter having printing applied to the same. The present invention further relates to a method for producing a printed matter.

A resin film for ultraviolet curable inkjet printing according to the present invention is defined in claim 1.

A printed matter according to the present invention is defined in claim 7.

A method of producing a printed matter according to the present invention is defined in claim 10.

Preferred embodiments of the invention are defined in the dependent claims.

### Effect of the Invention

The resin film for ultraviolet curable inkjet printing of the present invention has a remarkable effect that an ink does not easily peels in a printed matter printed by various ultraviolet curable inkjet printers even in the case that the resin film is continuously posted outdoors.

### Mode for Carrying out the Invention

The resin film for ultraviolet curable inkjet printing, a printed matter having printing applied to the same, and a printing method, of the present invention are described in detail below. The numerical range indicated using "from... to ..." in the present description means a range including the numerical values before and after "to" as a lower limit and an upper limit.

### (I) Constitution of Resin Film

The resin film for ultraviolet curable inkjet printing of the present invention has a porous printing layer as a layer receiving an ink for ultraviolet curable inkjet printing.

### [Porous printing layer]

The porous printing layer has a surface opening ratio in a range of from 6 to 30%, and functions to strongly bind a resin film and an ultraviolet curable inkjet printing ink.

Low viscosity ink droplets discharged from a nozzle of a printer for inkjet printing hit to the porous printing layer of the film, permeate in a surface opening portion by capillary action, and then cure by ultraviolet irradiation. Therefore, the ink droplets can exert stronger adhesive force. The porous printing layer is preferably a resin film layer containing a thermoplastic resin and at least one of an inorganic fine powder and an organic filler. By that the resin film having a porous printing layer and the ink after curing have water resistance, the printed matter does not deform and collapse by water. Furthermore, because the printed matter is that the ink after curing and the porous printing layer are physically strongly bound, the ink does not easily drop out, and strong resistance force to external force is obtained.

The porous printing layer is preferably stretched in at least uniaxial direction. An optional area of openings can be formed on the film surface by containing a filler such as an inorganic fine powder and an organic filler, and the like in the resin film and stretching the resin film.

Shape of the opening is optional, but the maximum width of the opening is preferably from 0.1 to 3.0 µm. Where the maximum width of the opening is less than 0.1 µm, the ink may not permeate. On the other hand, where the maximum width exceeds 3.0 µm, the opening becomes large as compared with fine ink droplets, and printing quality such as decrease in fineness tends to be deteriorated. Depth of the surface opening is not particularly limited. The depth of the surface opening generally has a size equivalent to the maximum width, and the depth is preferably a range of from 0.1 to 3.0 µm. Where the depth of the opening is less than 0.1 µm, the ink may not permeate.

Thickness of the porous printing layer is preferably a range of from 1 to 20 µm, and more preferably a range of from 3 to 10 µm. Where the thickness of the porous printing layer is less than 1 µm, the porous printing layer may not sufficiently adsorb the ink. Where the thickness of the porous printing layer exceeds 20 µm, the ink is adsorbed up to the inside of the layer, and printing may become slurred.

The porous printing layer may have a single layer structure, and may have a multilayer structure. When the porous printing layer has a multilayer structure, further function can be given to the porous printing layer by giving difference to capillary force, thereby further strongly adsorbing the ink.

### [Thermoplastic resin]

Examples of a thermoplastic resin used in the porous printing layer of the present invention include crystalline polyolefin resins such as a polypropylene resin, high density polyethylene, medium density polyethylene, linear low density polyethylene, an ethylene-vinyl acetate copolymer, an ethylene-acrylic acid copolymer, an ethylene-acrylic acid alkyl ester copolymer, an ethylene-methacrylic acid copolymer, a metal salt (ionomer) of an ethylene-methacrylic acid copolymer, an ethylene-methacrylic acid alkyl ester copolymer (in which alkyl moiety has from 1 to 8 carbon atoms), poly-4-methyl-1-pentene and an ethylene-cyclic olefin copolymer; polyester resins such as polyethylene terephthalate, polybutylene terephthalate, polyethylene napthalate, polybutylene succinate and polylactic acid; polyamide resins such as nylon-6, nylon-6,6, nylon 6,10 and nylon 6,12; polystyrene resins such as a styreneacrylonitrile resin, an acrylonitrile-butadiene-styrene resin; and thermoplastic resins such as a polyvinyl chloride resin and polycarbonate. Of those, thermoplastic resins having a melting point in a range of from 130 to 280°C, for example, polyolefin resins such as a polypropylene resin and high density polyethylene; and polyester resins such as a polyethylene terephthalate resin, are preferably used. Those resins can be used as mixtures of two kinds or more thereof.

Of those, a polyolefin resin is preferably used from the standpoints of water resistance, chemical resistance, production costs and the like, and a polypropylene resin is more preferably used from the standpoint of formability of surface opening. When the porous printing layer comprises a resin showing crystallinity, such as a polypropylene resin, contains a filler such as an inorganic fine powder and an organic filler, and is subjected to stretching, sufficient openings can be formed on the surface of the porous printing layer.

An isotactic polymer or a syndiotactic polymer, obtained by homopolymerizing propylene is preferably used as the polypropylene resin. Copolymers having various steric regularities obtained by copolymerizing propylene as a base component and α-olefin such as ethylene, 1-butene, 1-hexene, 1-heptene or 4-methyl-1-pentene can further be used. The copolymer may be a binary system or a multicomponent system such as a ternary system, and may be a random copolymer or a block copolymer.

The content of the thermoplastic resin in the porous printing layer in the resin film for printing of the present invention is preferably from 20 to 50% by weight, more preferably from 25 to 48% by weight, and particularly preferably from 35 to 45% by weight. Where the content of the thermoplastic resin exceeds 50% by weight, desired surface opening ratio is not obtained, and adhesiveness between cured ink for ultraviolet curable inkjet printing and a porous printing layer tends to become insufficient. On the other hand, where the content of the thermoplastic resin is less than 20% by weight, stretch molding of a resin film tends to become difficult.

### [Inorganic fine powder]

Kind of the inorganic fine powder that can be used in the porous printing layer of the present invention is not particularly limited so long as surface openings are formed. Examples of the inorganic fine powder include heavy calcium carbonate, light calcium carbonate, calcined clay, talc, barium sulfate, diatomaceous earth, magnesium oxide, zinc oxide, titanium oxide and silicon oxide. Those powders may be surface-treated with fatty acid, a polymeric surfactant, an antistatic agent and the like. Above all, heavy calcium carbonate, light calcium carbonate, calcined clay and talc are preferably used for the reason that those have good pore formability and are inexpensive.

### [Organic filler]

Kind of the organic filler used in the porous printing layer of the present invention is not particularly limited so long as surface openings are formed. Those organic fillers are incompatible with the thermoplastic resin that forms the porous printing layer, has a melting point of from 120 to 300°C or a glass transition temperature of from 120 to 280°C, and finely disperse under melt-kneading conditions of the thermoplastic resin. In the case that the thermoplastic resin is a polyolefin resin, examples of the organic filler include polyethylene terephthalate, polybutylene terephthalate, polyethylene naphthalate, polystyrene, polyamide, polycarbonate, polystyrene sulfide, polyphenylene sulfide, polyimide, polyether ketone, polyetherether ketone, polymethyl methacrylate, poly-4-methyl-1-pentene, a homopolymer of cyclic olefin and a copolymer of cyclic olefin and ethylene, Fine powder of a thermosetting resin such as a melamine resin may be used.

The inorganic fine powder and the organic filler may be used alone by selecting one kind from those or may be used by combining two kinds or more. Combination of two kinds or more may be a combination of the inorganic fine powder and the organic filler.

Content of the inorganic fine powder and organic filler in the resin film layer as the porous printing layer of the present invention is preferably from 50 to 80% by weight, more preferably from 55 to 70% by weight, and particularly preferably from 55 to 65% by weight. Where the content of the inorganic fine powder and organic filler exceeds 80% by weight, internal cohesive force of the porous printing layer obtained is decreased, and consequently, material fracture easily occurs in the layer. As a result, in the case of evaluating adhesiveness between an ink and a resin film with cellophane tape peeling or the like, there is a possibility that a cured ink for ultraviolet curable inkjet printing easily drops out of the resin film. On the other hand, where the content is less than 50% by weight, the desired surface opening ratio is not obtained, and adhesiveness between the cured ink for ultraviolet curable inkjet printing and the resin film tends to become insufficient.

### [Optional component]

### (Dispersant)

As necessary, a dispersant of the inorganic fine powder and organic filler can optionally be added to the porous printing layer of the present invention. Addition of the dispersant enables fine dispersion of the inorganic fine powder and organic filler in a thermoplastic resin, and makes it possible to form surface openings more effectively.

Examples of the dispersant include acid-modified polyolefin and silanol-modified polyolefin. Of those, acid-modified polyolefin is preferably used. Examples of the acid-modified polyolefin include carboxylic anhydride group-containing polyolefin obtained by random-copolymerizing or graft-copolymerizing maleic anhydride, carboxylic acid group-containing polyolefin obtained by random-copolymerizing or graft-copolymerizing unsaturated carboxylic acid such as acrylic acid or methacrylic acid, and epoxy group-containing polyolefin obtained by random-copolymerizing or graft-copolymerizing glycidyl methacrylate.

Specific examples include maleic anhydride-modified polyethylene, maleic anhydride-modified polypropylene, acrylic acid-modified polypropylene, an ethylene-methacrylic acid random copolymer, an ethylene-glycidyl methacrylate random copolymer, an ethylene-glycidyl methacrylate graft copolymer and glycidyl methacrylate-modified polypropylene. Above all, maleic anhydride-modified polyethylene and maleic anhydride-modifed polypropylene are preferably used from the standpoints of solubility in a thermoplastic resin and easy dispersion of an inorganic fine powder and the like.

### (Additives)

If needed, conventional additives can optionally be added to the porous printing layer of the present invention. Examples of the additives include an antioxidant, a heat stabilizer, a light stabilizer, an ultraviolet absorber, a slip agent such as fatty acid amide, an antiblocking agent, a dye, a pigment, a plasticizer, a crystal nucleating agent, a release agent and a flame retardant. Those are preferably added in a range that adhesiveness of the objective ink is not impaired.

### [Base layer]

The resin film for ultraviolet curable inkjet printing of the present invention preferably includes a base layer other than the porous printing layer.

In the resin film for ultraviolet curable inkjet printing, the base layer gives printability such as strength and stiffness, water resistance, chemical resistance and as the case may be, opacity to the resin film, as a support of the resin film. Furthermore, in film formation, the base layer supports the porous printing layer, thereby facilitating formation.

Material of the base layer is not particularly limited, but is preferably a resin film containing a thermoplastic resin from the standpoint of water resistance similar to the porous printing layer. The thermoplastic resin can use the same thermoplastic resin as described in the item of the porous printing layer. Similarly, an inorganic fine powder, an organic filler, a dispersant, conventional additives and the like can optionally be added to form the desired resin film. The base layer may have a single layer structure and may have a multilayer structure.

Furthermore, the porous printing layer can be provided on both sides of the base layer to form a double side-printable resin film.

When the base layer has a multilayer structure and a masking layer such as a solid printing layer or a pigment-containing layer is contained therein, print on one side is not seen through, and visibility of print provided on both sides can be improved.

In the case that the base layer is a resin film containing a thermoplastic resin, and contains at least one of an inorganic fine powder and an organic filler, the content of the inorganic fine powder and organic filler is preferably from 1 to 45% by weight, more preferably from 3 to 40% by weight, and particularly preferably from 5 to 35% by weight. When the content of the inorganic fine powder and organic filler is less than 45% by weight, the base layer obtained can have appropriate strength, making it easy to support the porous printing layer. On the other hand, when the content is 1% or more, the content can meet the intent of compounding an inorganic fine powder and an organic filler, such as the giving of opacity to the base layer obtained.

Thickness of the base layer falls within a range of preferably from 30 to 500 µm, and more preferably from 50 to 300 µm. Where the thickness of the base layer is less than 30 µm, stiffness may lack when the film is used as a large-sized poster which is posted outdoors. Where the thickness exceeds 500 µm, weight of the resin film for printing tends to be excessively increased.

### (II) Production of Resin Film

### [Production method]

The resin film for ultraviolet curable inkjet printing of the present invention can be produced by various conventional methods alone or combining those methods. A resin film produced by any method is included in the scope of the present invention so long as the resin film satisfies the constituent elements of the present invention.

For example, the resin film for ultraviolet curable inkjet printing of the present invention can be formed into a sheet by a method such as extrusion cast molding, coextrusion cast molding, extrusion lamination or co-extrusion lamination. In the resin film, particularly the porous printing layer is preferably stretched in at least uniaxial direction as described before from the standpoint of formation of surface openings.

In the case that the resin film for ultraviolet curable inkjet printing of the present invention is a laminate film comprising a porous printing layer and a base layer, those layers are preferably stretched. The laminate resin film by stretch molding has the advantages that weight is decreased by formation of internal pores and stiffness is improved by orientation of resin molecule.

In the case that the base layer is constituted of a plurality of layers, at least one layer is preferably stretched. In the case of stretching a plurality of layers, each layer may be stretched individually before laminating, and those layers may be stretched together after laminating. The stretched layer may again be stretched after laminating. To give openings to the surface of the porous printing layer of the present invention, a method of film-forming a material forming the porous printing layer on the base layer and then stretching the whole is particularly preferred.

Stretching of the resin film can use various conventional methods. For example, a method of obtaining a resin film by melt-kneading the resin material using a screw-type extruder, extruding a molten resin using T-die or I-dye connected to the extruder to mold the resin into a sheet, and stretching the sheet can use a roll vertical stretching method utilizing difference in peripheral speed of rolls, a horizontal stretching method utilizing a tenter oven, a successive biaxial stretching method combining those, and the like. Furthermore, a simultaneous biaxial stretching method combining a tenter oven and a pantograph, a simultaneous biaxial stretching method combining a tenter oven and a linear motor, and the like can be used.

Furthermore, a simultaneous biaxial stretching method (inflation molding) of extrusion molding a molten resin into a tube using a circular die connected to a screw-type extruder, and blowing air into the tube, and the like can be used.

Stretching temperature can be set to a glass transition point or higher of a resin used in the case that the thermoplastic resin is an amorphous resin, and to a temperature of from a glass transition point or higher of a non-crystalline part to a melting point or lower of a crystalline part in the case of a crystalline resin. Particularly, where a crystalline resin is used in a constituent resin component of a porous printing layer and the stretching temperature exceeds a melting point of a crystal part of the crystalline resin, the desired surface opening ratio is not obtained, and adhesiveness between the ink for ultraviolet curable inkjet printing and a resin film which is a printing medium tends to be decreased, which is not preferred.

For stable stretch molding of a resin film, a stretching rate is preferably from 20 to 350 m/min. Similarly, a stretching ratio is preferably from 2 to 80 times, more preferably from 3 to 60 times, and particularly preferably from 4 to 50 times, as an area stretching ratio. Where the area stretching ratio is less than 2 times, the desired surface opening ratio is not obtained in the porous printing layer, and sufficient adhesiveness to the ink for ultraviolet curable inkjet printing, cured after ultraviolet curable inkjet printing tends to be not obtained. On the other hand, where the area stretching ratio exceeds 80 times, breakage of a resin film easily occurs, and stable stretch molding is difficult.

### [Surface opening ratio]

The porous printing layer in the resin film for ultraviolet curable inkjet printing of the present invention produced by the method described above has a surface opening ratio measured by a method described below of from 6 to 30%, preferably from 6.5 to 28%, and particularly preferably from 10 to 20%. Where the surface opening ratio is less than 6%, sufficient anchor effect between the ink for ultraviolet curable inkjet printing and the surface of the resin film as a medium to be printed is not obtained, and even though the ink is cured by ultraviolet irradiation, adhesiveness to the resin film tends to become insufficient, which is not preferred. Where the surface opening ratio exceeds 30%, sufficient anchor effect is obtained, but internal cohesive force of the porous printing layer is decreased. As a result, when adhesiveness between the ink and the resin film is evaluated with, for example, peeling of a cellophane tape, material fracture easily occurs in the layer. As a result, high adhesive strength is not obtained between an ink layer cured by ultraviolet irradiation and the film, and there is a possibility that practical use as a printed matter becomes problem.

Measurement method of the surface opening ratio in the present invention is obtained form an area portion of pores (openings) on an observation region by observing the surface at porous printing layer side of a resin film. Specifically, a part is optionally cut out of a resin film sample, and stuck to an observation sample table such that a porous printing layer faces an observation surface. Gold, Gold-palladium or the like is deposited on the observation surface, pores on the surface in an optional magnification (for example, enlarged to a magnification of from 500 to 3,000) that is easy to observe are observed with an electron microscope. The region observed is read as image data, the image is subjected to image processing with an image analyzer to obtain an area ratio of a pore part. Thus, a surface opening ratio of the porous printing layer was obtained.

### (III) Surface Treatment of Resin Film

### [Surface oxidation treatment]

In the resin film for ultraviolet curable inkjet printing of the present invention, a surface oxidation treatment is preferably applied to the surface thereof at the porous printing layer side as a treatment before providing a coating layer described hereinafter. By applying the treatment, the coating layer can uniformly be provided up to the inside of surface openings, and this facilitates introduction of a printing ink and improvement of anchor effect of the ink,

Examples of the surface oxidation treatment includes treatment methods selected from a corona discharge treatment, a flame treatment, a plasma treatment, a glow discharge treatment and an ozone treatment. A corona discharge treatment and a plasma treatment are preferred, and in the case of the corona treatment, the treatment dose is from 10 to 200W.min/m² (from 600 to 12,000 J/m²), and preferably from 20 to 180W.min/m² (from 1,200 to 10,800 J/m²), from the standpoint that stable and effective treatment is performed.

### [Coating layer]

The resin film for ultraviolet curable inkjet printing of the present invention is characterized in that a coating layer containing at least one nitrogen-containing polymer of (a) an ethyleneimine polymer, (b) a modified ethyleneimine polymer, and (c) an epichlorohydrin adduct of polyamine polyamide is provided.

The coating layer has strong chemical affinity with particularly polymerizable monomer components in the ink for ultraviolet curable inkjet printing described in detail hereinafter. The presence of the layer improves wettability of the ink for ultraviolet curable inkjet printing to the resin film, and functions to easily introduce an ink in surface openings of the porous printing layer.

Those components are water-soluble polymers, and are coated in small thickness on the layer as a surface modifier of the porous printing layer. Where the thickness of the coating layer is too large, the coating layer clogs surface openings of porous printing layer, and an anchor effect of the ink at the time of ultraviolet curable inkjet printing tends to be difficult to be obtained. On the other hand, where the thickness is too small, the coating layer cannot homogeneously be present on the surface of the porous printing layer, and sufficient surface modifying effect tends to be difficult to be obtained. From those standpoints, the coating dose of the coating layer to the porous printing layer is from 0.01 to 1 g/m², in terms of solid content after drying per unit area (m²), Where the coating dose is outside the range, adhesive force to the porous printing layer of the ink tends to become insufficient.

### [Nitrogen-containing polymer]

The nitrogen-containing polymer contained in the coating layer in the present invention is at least one of an ethyleneimine polymer, a modified ethyleneimine polymer and an epichlorohydrin adduct of polyamine polyamide.

Of those, the ethyleneimine polymer has strong affinity with an ink and is therefore desirable. A modified body obtained by modifying polyethyleneimine or an ethyleneimine adduct of polyamine polyamide with alkyl halides having from 1 to 24 carbon atoms, alkenyl halides, cycloakly halides or benzyl halides is preferred as the ethyleneimine polymer. Specific examples of the halides used as a modifier include methyl chloride, methyl bromide, n-butyl chloride, lauryl chloride, stearyl iodide, oleyl chloride, cyclohexyl chloride, benzyl chloride, allyl chloride and cyclopentyl chloride.

Although not a degree as in the ethyleneiminie polymer, the epichlorohydrin adduct of polyamine polyamide is easy to obtain affinity with an ink and is preferable. When the epichlorohydrin adduct of polyamine polyamide is contained, nitrogen-containing polymers in the coating layer after coating and drying crosslink to each other, thereby water resistance of the layer can be improved. Therefore, combined use of those is particularly preferred.

Other components, for example, an antistatic agent, a crosslinking agent and the like may optionally be added to those coating layers.

### [Zwitterionic acrylic copolymer]

In the present invention, the coating layer can contain an antistatic agent. This component imparts antistatic performance to the resin film for printing.

Low molecular weight type antistatic agents are well known, and various products are commercially available, Form the standpoint of improvement of water resistance that is an object of the present invention, the low molecular weight type has easily water-soluble properties, and is therefore not suitable for the present invention.

The antistatic agent suitable for the present invention is a polymer type antistatic agent, and cation type, anion type, ampholytic type, nonionic type and the like can be used.

Examples of the cationic type include antistatic agents having an ammonium salt (primary to tertiary amine salts, quaternary ammonium salt and the like), and antistatic agents having a phosphonium salt.

Examples of the anionic type include antistatic agents having an alkali metal salt of sulfonic acid, phosphoric acid, carboxylic acid or the like, and an alkali metal salt (for example, lithium salt, sodium salt, potassium salt or the like) of acrylic acid, methacrylic acid, (anhydrous) maleic acid or the like, in the molecule.

Examples of the ampholytic type include antistatic agents containing both cationic type and anionic type structures in the same molecule, and specific example thereof includes betaine type.

Examples of the nonionic type include an ethylene oxide polymer having an alkylene oxide unit and a polymer having an ethylene oxide polymerization component in a molecular chain.

Further example includes a polymer type antistatic agent having boron in a molecular structure.

Of those, the ampholytic (zwitterionic) polymer type antistatic agent is preferred, and a zwitterionic acrylic copolymer is more preferred.

More specifically, a tertiary nitrogen-containing (meth)acrylic copolymer, or a quaternary nitrogen-containing (meth)acrylic copolymer obtained by quarternizing the tertiary nitrogen-containing (meth)acrylic copolymer with a cationization agent is exemplified. Further specifically, a tertiary nitrogen-containing (meth)acrylic copolymer obtained by copolymerizing the following monomer components (d1) to (d3), and a quaternary nitrogen-containing (meth)acrylic copolymer obtained by quartemizing the tertiary nitrogen-containing (meth)acrylic copolymer with a cationization agent are exemplified. 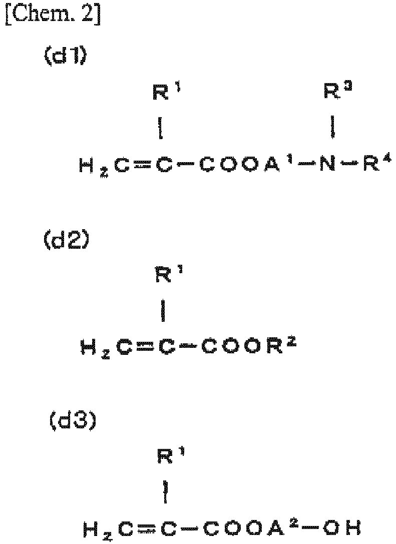 (In the above formula, R¹(s) are the same or different from each other, and represent hydrogen or a methyl group, R² represents an alkyl group having from 1 to 18 carbon atoms, R³ and R⁴ each represents hydrogen or an alkyl group having from 1 to 2 carbon atoms, and A¹ and A² each represents an alkylene group having from 2 to 6 carbon atoms.)

The zwitterionic acrylic copolymer comprising above components is preferably obtained by copolymerizing the monomer components (d1) to (d3) in proportions that the monomer component (d1) is from 20 to 80% by weight, the monomer component (d2) is from 10 to 70% by weight, and the monomer component (d3) is from 10 to 70% by weight. The antistatic agent comprising the zwitterionic acrylic copolymer obtained by copolymerizing the above components in the above proportions has the inherent antistatic performance, and additionally has high affinity with an ink for ultraviolet curable inkjet printing, and is difficult to hinder adhesiveness, which is preferred.

### [Coating and drying]

The surface treatment agent (coating agent) that forms the coating layer is used in a state of a solution by dissolving the nitrogen-containing polymer in water or a solvent such as methyl alcohol, ethyl alcohol, isopropyl alcohol, acetone, methyl ethyl ketone, ethyl acetate, toluene or xylene. Above all, use in the form of an aqueous solution facilitates process control, and is therefore preferred. The solution concentration is generally from 0.1 to 20% by weight, and preferably from 0.2 to 10% by weight.

The coating method of the surface treatment agent is performed by coating with a die coater, a roll coater, a gravure coater, a spray coater, a blade coater, a reverse coater, an air knife coater, a size press coater or the like, or dipping.

The surface treatment agent is coated on at least the surface at the porous printing layer side of the resin film for ultraviolet curable inkjet printing. However, there is no problem if the surface treatment agent is coated on both surfaces of the resin film. The coating of the surface treatment agent may be carried out in combination with resin film molding in a molding line of the resin film, and may be carried out on the resin film previously molded, in a separate line. According to need, excess solvent is removed by passing through a drying step using an oven or the like, thereby forming a coating layer.

### (IV) Ultraviolet Curable Inkjet Printing

### [Printing ink]

The ink for ultraviolet curable inkjet printing that can be used in the present invention can use the conventional inks capable of forming fine ink droplets in an inkjet printer and capable of sufficiently being cured by ultraviolet irradiation. The index specifying the ink for ultraviolet curable inkjet printing is that a low molecular weight polymerizable monomer is contained, and the viscosity is less than 50 mPa·s at 25°C.

The ink for ultraviolet curable inkjet printing generally comprises, in addition to the above polymerizable monomers, a dye and a pigment as a coloring material, a reactive oligomer and a photopolymerization initiator.

As a mechanism that the ink cures, a photoradical polymerization method is generally used from excellent curing rate. A large amount of low viscosity photoradical polymerizable monomer is compounded with the ink for ultraviolet curable inkjet printing in the reaction system in order to decrease viscosity. Examples of the polymerizable monomer include aliphatic (meth)acrylate, alicyclic (meth)acrylate, aromatic (meth)acrylate, ether (meth)acrylate, (meth)acrylamide, and vinyl monomer (vinyl compound).

In the present invention, the (meth)acrylate means to contain at least one of acrylate and methacrylate. Similarly, the (meth)acrylamide means to contain at least one of acrylamide and methacrylamide.

More specific examples of the polymerizable monomer include lauryl acrylate, stearyl acrylate, cyclohexyl acrylate, isooctyl acrylate, isomyristyl acrylate, isostearyl acrylate, isobornyl acrylate, ethoxy-diethylene glycol acrylate, 2-ethylhexyl-carbitol acrylate, neopentyl glycol benzoate acrylate, nonyl phenoxypolyethylene glycol acrylate, ECH-modified phenoxyacrylate, phenoxyethyl acrylate, p-cumyl phenol ethylene oxide-modified acrylate, tricyclodecane dimethanol acrylate, vinyl caprolactam, acryloyl morpholine, 1,6-hexanediol diacrylate, 2-hydroxy-3-acryloyloxypropyl methacrylate, 9-nonanediol diacrylate, dimethyloldicyclopentane diacrylate, neopentyl glycol diacrylate, neopentyl glycol-modified trimethylolpropane diacrylate, polyethylene glycol diacrylate, dipentaerythritol hexaacrylate, polytetramethylene glycol diacrylate, 2-butyl-2-ethyl-1,3-propanediol diacrylate, polytetramethylene glycol diacrylate, trimethylolpropane triacrylate, and trimethylolpropane ethylene oxide-modified triacrylate.

Of those, diacrylates and triacrylates can form a network structure after polymerization reaction, and is compounded to obtain a rigid ink coating film. To adjust the viscosity to less than 50 mPa·s at 25°C, low molecular weight components such as monoacrylate or vinyl caprolactam are preferably compounded mainly (total amount: 50% by weight or more).

Where the polymerization component in the ink for ultraviolet curable inkjet printing is only the polymerizable monomer, disadvantages such as insufficient flexibility of an ink film after curing and deterioration of ink storage stability may occur. To eliminate those disadvantages, it is preferred that a reactive oligomer (prepolymer) having a molecular weight higher than that of the polymerizable monomer and capable of giving various functions is appropriately compounded,

Examples of the photopolymerization-reactive oligomer include a urethane oligomer, a polyether oligomer, an epoxy oligomer, a polyester oligomer and an acrylic oligomer.

More specific examples of the urethane oligomer include EBECRYL 230, EBECRYL 244, EBECRYL 245, EBECRYL 270, EBECRYL 284, EBECRYL 285, EBECRYL 4858, EBECRYL 210, EBECRYL204, EBECRYL 8804, and EBECRYL 8800-20R, manufactured by DICEL-CYTEC Company Ltd.; AH-600, AT-600 and UA-306H, manufactured by Kyoeisha Chemical Co., Ltd.; BEAMSET 502H, BEAMSET 504H, BEAMSET 505A-6, BEAMSET 550B and BEAMSET 575, manufactured by Arakawa Chemical Industries, Ltd.; Actilane 200, Actilane 200TP20, Actilane 210TP30, Actilane 230HD30, Actilane 250HD25, Actilane 250TP25, Actilane 270, Actilane 280, Actilane 290, Actilane 165, Actilane 167 and Actilane 170, manufactured by AKCROS; CN929, CN961E75, CN961H81, CN962, CN963, CN963A80, CN963B80, CN963E75, CN983E80, CN964, CN965, CN980 and CN981, manufactured by Sartomer Company, Inc.; ARONIX M-1100, ARONIX M-1200 and ARONIX M-1600, manufactured by Toagosei Co., Ltd.; and KAYARAD UX-2201, KAYARAD UX-2301, KAYARAD UX-3204, KAYARAD UX-3301, KAYARAD UX-4101 and KAYARAD UX-7101, manufactured by Nippon Kayaku Co., Ltd.

Specific examples of the polyether oligomer include PO84F and LR-8894, manufactured by BASF.

Specific examples of the epoxy oligomer include Actilane 300, Actilane 310, Actilane 320, Actilane 320DA25, Actilane 340 and Actilane 330, manufactured by AKCROS; EBECRYL 600, EBECRYL 3500, EBECRYL 3608, EBECRYL 3700 and EBECRYL 3702, manufactured by DICEL-CYTEC Company Ltd.; and CN104, CN111, CN115 and CN151, manufactured by Sartomer Company, Inc,

Specific examples of the polyester oligomer include BEAMSET 700, BEAMSET 710, BEAMSET 720, BEAMSET 730 and BEAMSET 750, manufactured by Arakawa Chemical Industries, Ltd.; EBECRYL 770, EBECRYL 811 and EBECRYL 1830, manufactured by DICEL-CYTEC Company Ltd.; and ARONIX M-6100, ARONIX M-6200 and ARONIX M-7100, manufactured by Toagosei Co., Ltd.

Specific examples of the acrylic oligomer include EBECRYL 767 and EBECRYL 1200, manufactured by DICEL-CYTEC Company Ltd.

Those compounds have large molecular weight and high viscosity. Therefore, increase in addition amount results in increase in viscosity of an ink. For this reason, it is important to add those compounds in an amount that does not depart from the desired viscosity. Those compounds may be used by combining two kinds or more.

Examples of the photoradical polymerization initiator in the photoradical polymerization-reactive ink for ultraviolet curing inkjet printing include aryl ketone photopolymerization initiators (for example, benzyl dimethyl ketals, acetophenones, benzoin ethers, benzophenones, oxime ketones, alkyl aminobenzophenoenes, benzyls, bezoins, benzoyl benzoates and α-acyloxime esters), sulfur-containing photopolymerization initiators (for example, sulfides and thioxanthones), and various kinds of photopolymerization initiators conventionally used in ultraviolet curable resin compositions and the like. Those photoradical polymerization initiators can be used in one kind alone or as mixtures of two kinds or more. Furthermore, the embodiment free of a polymerization initiator, as described in Patent Document 7, is possible.

More specifically, examples of the photopolymerization initiator include 2,2-dimethoxy-1,2-diphenylethan-1-one, 1-hydroxycyclohexylphenyl ketone, benzophenone, 2,2-dimethoxy-2-phenylacetophenone, 2,4-diethylthoxan-9-one, isopropyl thioxanthone, 2,4,6-trimethylbenzoyl diphenyl phosphine oxide, methyl phenyl glyoxylate, bis-2,4,6-trimethylbenzoyl phenyl phosphine oxide, 2-benzyl-2-dimethylamino-1-(4-morpholinophenyl)-butanone-1,4-phenoxydichloro-acetophenone, bis(2,6-dimethoxybenzoyl)-2,4,4-trimethyl-pentylphosphine oxide, 4-t-butyl-dichloroacetophenone, 4-t-butyl-trichloroacetophenone, diethoxyacetophenone, 2-hydroxy-2-methyl-1-phenylpropan-1-one, 2-hydroxyethyl methacrylate, 1-(4-isopropylphenyl)-2-hydroxy-2-methylpropan-1-one, 1 -(4-dodecylphenyl)-2-methylpropan-1-one,

1-[4-(2-hydroxyethoxy)phenyl]-2-hydroxy-2-methylpropan-1-one, 2-methyl-1-[4-(methylthio)phenyl]-2-morpholinopropan-1-one, dibenzoyl, benzoin, benzoin methyl ether, benzoin ethyl ether, benzoin isopropyl ether, benzoin isobutyl ether, benzyl dimethyl ketal, benzoylbenzoic acid, methyl benzoylbenzoate, 4-phenyl benzophenone, hydroxybenzophenone, acrylated benzophenone, 3,3'-dimethyl-4-methoxybenzophenone, 3,3',4,4'-tetrakis(t-butylperoxycarbonyl)benzophenone, 9,10-phenanthrenequinone, camphorquinone, dibenzosuberon, 2-ethylanthraquinone, 4',4"-diethylisophthalophenone, α-acyloxime ester, 4-benzoyl-4'-methyldiphenyl sulfide, thioxanthone, 2-chlorothioxanthone, 2-methyl thioxanthone, 2,4-dimethyl thioxanthone, 2,4-dichlorothioxanthone, 2,4-diisopropyl thioxanthone and acylphosphine oxide. Those may be used by combining several kinds.

A photosensitizer such as amines can be used in combination with the photopolymerization initiator in the ink for ultraviolet curable inkjet printing. Specific examples of the photosensitizer include triethanolamine, ethyl 4-dimethylaminobenzoate, isoamyl 4-dimethylaminobenzoate and methyl diethanolamine.

The pigment and dye as coloring materials in the ink for ultraviolet curable inkjet printing can use the conventional material in an amount that does not substantially impair ultraviolet curing.

Examples of the pigment include extender pigments described in Handbook of Painting Materials, 1970 (Japan Paint Manufacturers Association); organic pigments and inorganic pigments, such as white pigments, black pigments, gray pigments, red pigments, brown pigments, green pigments, blue pigments, purple pigments, metal powder pigments, phosphorescent pigments and pearl gray pigments; and plastic pigments. Black carbons are generally used as the black pigment. Those carbon blacks are knew to slightly impair curing of an ink due to have the tendency to absorb ultraviolet rays and to adsorption of radials generated, but are conventionally used.

The ink for ultraviolet curable inkjet printing that can be used in the present invention may be an ink that uses photocationic polymerization reaction as the mechanism that the ink cures.

The reaction system has the advantage that does not receive hindrance by oxygen, and therefore enables ink droplets to adjust into fine droplets. As a result, according to the ink for ultraviolet curable inkjet printing of the reaction system, high definition inkjet printing can be performed. Furthermore, due to less curing shrinkage, the ink has the advantage that designing of low viscosity ink is easy.

The ink for ultraviolet curable inkjet printing contains a cation polymerizable material and a photocationic polymerization initiator. Examples of the cation polymerizable material include epoxy resins, vinyl ether compounds and compounds having oxetane ring.

Examples of the epoxy resins include a bisphenol A type epoxy resin, a bisphenol F type epoxy resin, a phenol novolak type epoxy resin, a trisphenol methane type epoxy resin, an aliphatic epoxy resin and an alicyclic epoxy resin.

Examples of the vinyl ether compound include reactive vinyl ether monomers such as 2-hydroxyethylvinyl ether, 1,4-butanediol monovinyl ether, 1,9-nonanediol monovinyl ether, diethylene glycol monovinyl ether, triethylene glycol monovinyl ether, cyclohexyl-1,4-dimethyl monovinyl ether, 2-chloroethylvinyl ether, 2-(meth)acryloyloxyethylvinyl ether, triethylene glycol divinyl ether, tetraethylene glycol divinyl ether, polytetramethylene glycol divinyl ether, 1,4-butanediol divinyl ether, 1,9-nonanediol divinyl ether, cyclohexyl-1,4-dimethylol divinyl ether, trimethylolpropane trivinyl ether and pentaerythrilol tetravinyl ether; ethylene glycol;
polyols such as 1,4-butanediol, 3-methyl-1,5-pentanediol, polypropylene glycol, neopentyl glycol, polytetramethylene glycol, polyester polyol and polycaprolactone polyol; urethane vinyl ethers that are reaction precuts between organic polyisocyanates (for example, tolylene diisocyanate, 4,4'-diphenylmethane diisocyanate, isophorone diisocyanate and hexamethylene diisocyanate) and hydroxyl-containing vinyl ethers (for example, 2-hydroxyethylvinyl ether, 1,4-butanediol monovinyl ether and cyclohexyl-1,4-dimethylol monovinyl ether); and reactive vinyl ether oligomers such as polyester polyvinyl ether, that are reactions products between the hydroxyl-containing vinyl ethers and polycarboxylic chlorides (for example, phthalic dichloride, isophthalic dichloride and tetrahydrophthalic dichloride).

Examples of the compound having an oxetane ring include 3-ethyl-3-hydroxyethyl oxetane, 1,4-bis[(3-ethyl-3-oxetanylmethoxy)methyl]benzene, trans-3-t-butyl-2-phenyloxetane, 3,3,4,4-tetramethyl-2,2-diphenyloxetane, di[3-ethyl(2-methoxy-3-oxetanyl)]methyl ether, 1,4-bis(2,3,4,4-tetramethyl-3-ethyloxetanyl)butane, 1,4-bis(3-methyl-3-ethyloxetanyl)butane, di(3,4,4-trimethyl-3-ethyloxetanyl)methyl ether and 3-(2-ethyl-hexyloxymethyl)-2,2,3,4-tetramethyloxetane,
2-(2-ethyl-hexyloxy)-2,3,3,4,4-pentamethyloxetane,4,4'-bis[(2,4-dimethyl-3-ethyl-3-oxetanyl)methoxy]biphenyl, 1,7-bis(2,3,3,4,4-pentamethyloxetanyl)heptane, silsesquioxane having an oxetanyl group, 2-methoxy-3,3-dimethyloxetane, 2,2,3,3-tetramethyloxetane, 2-(4-methoxyphenyl)-3,3-dimethyloxetane and di(2-(4-methoxyphenyl)-3-methyloxetan-3-yl)ether.

Examples of the photocationic polymerization initiator include triphenylsulfonium hexafluoroantimonate, triphenylsulfonium hexafluorophosphate, Adeka Optomer SP-150 and Adeka Optomer SP-170, manufactured by ADEKA; FC-508 and FC-512, manufactured by 3M; polyallylsulfonium salt such as UVE-1014, manufactured by General Electric Company; and polyaryliodonium salts such as diphenyliodonium hexafluoroantimonate, p-nonylphenyliodonium hexafluoroantimonate, 4,4'-diethoxyphenyliodonium hexafluoroantimonate, and IRGACURE 250, manufactured by Ciba Japan. Those photocationic polymerization initiators can be used in one kind alone or by combining several kinds.

According to need, a photosensitizer, stabilizers such as an ultraviolet absorber, an antioxidant and a heat polymerization inhibitor; surfactants such as a leveling agent, a defoaming agent, a thickener, an antisettling agent, a pigment dispersant, an antistatic agent and an antifogging agent; and various additives such as a wax, a slip agent and a near infrared absorber may appropriately be compounded with the ink for ultraviolet curable inkjet printing according to the present invention. Furthermore, fine particles such as coloring pigment and extender pigment may be dispersed.

The ink for ultraviolet curable inkjet printing used in the present invention has a viscosity measured by No. 1 spindle at 60 rpm according to JIS-K-7117-1 (1999) smaller than 50 mPa·s, and more preferably from 5 to 40 mPa·s, in a generally usable temperature region, that is, an ordinary temperature region (25°C in the present invention). Where the viscosity exceeds 50 mPa·s, viscosity of the ink is too high, and there are possibilities that the ink cannot be discharged from a nozzle, a nozzle is clogged, and ink droplets in a fine and stable shape become difficult to be discharged. In the resin film for ultraviolet curable inkjet printing of the present invention, where an ink having high viscosity exceeding 50 mPa·s is used, the ink does not spread in the inside of openings after hitting to the porous printing layer, and there is a possibility that adhesiveness between a resin film and an ink film is deteriorated when a printed matter is immersed in water. On the other hand, where the viscosity is lower than 5 mPa·s, the amount of an ink discharged is too large, and there is a possibility that control of droplets becomes difficult.

### [Inkjet printing]

The ink for ultraviolet curable printing is printed on a coating layer of the resin film for ultraviolet curable printing of the present invention by inkjet printing. The inkjet printing is conducted by the method generally used. For example, a method of spraying the ink for ultraviolet curable inkjet printing as fine droplets from a nozzle, and attaching the fine droplets to a medium to be printed, thereby forming an image is exemplified.

### [Printer]

The ultraviolet curable inkjet printer according to the present invention is not particularly limited. For example, continuous methods such as a charge modulation method, a microdot method, a charge injection method and an ink mist method, on-demand methods such as Kaiser method, Stemme method, a pulse jet method, Bubble Jet (registered trademark) method and electrostatically-abstracting method can be used.

### [Ultraviolet irradiation]

After applying the inkjet printing, the ink for ultraviolet curable inkjet printing is dried and solidified by ultraviolet irradiation. The ultraviolet irradiation is not particularly limited so long as it is a method that the ink for ultraviolet curable inkjet printing is cured. For example, a method of irradiating with ultraviolet rays emitted from a metal halide lamp (200 to 400 nm), a low pressure mercury lamp (180 to 250 nm), a high pressure mercury lamp (250 to 365 nm), a black light (350 to 360 nm) or a UV-LED lamp (355 to 375 nm) such that an irradiation dose is from 300 to 3,000 mJ/cm², and preferably from 400 to 1,000 mJ/cm², is exemplified.

A method in which both an inkjet nozzle and an ultraviolet irradiation apparatus move on a medium to be printed and just after printing the medium to be printed with an ink, the ink is irradiated with ultraviolet rays; a method in which an ultraviolet irradiation apparatus is arranged in the entire width direction of a printing site, after printing a medium to be printed with every ink, ultraviolet irradiation is conducted, and those procedures are repeated; a method in which after printing a medium to be printed with all colors, ultraviolet irradiation is conducted only one time; and the like are used.

### (V) Evaluation

To evaluate that the resin film for ultraviolet curable inkjet printing of the present invention has excellent water resistance, and ink peeling is difficult to occur in the case that its printed matter is continuously posted outdoors, evaluation was made by a peeled area of an ink in the case that after dipping the printed matter in a 33°C hot water for 4 days, adherability of the ink was tested according to JIS K-5600-5-6 (1999). More specifically, this is a method measured in the item of "Adherability of ink" in Test Examples described hereinafter.

In the evaluation of the present invention, the peeled area of ink is preferably from 0 to 35% (classification of the test result is from 0 to 3), and more preferably from 0 to 15% (classification of the test result is from 0 to 2). Where the peeled area of ink exceeds 35% and is large, it is difficult to say that ink peeling is difficult to occur as compared with the conventional products, and such a peeled area is not preferred. Examples

The characteristics of the present invention are further specifically described below by reference to Examples and Comparative Examples.

The materials, amounts used, ratios, treatment contents, treatment procedures and the like shown in the following Examples can be optionally altered without departing from the scope of the appended claims. Therefore, it should not be understood that the scope of the present invention is restricted to the specific examples described below,

### (Example 1)

### <Production of resin film>

A resin composition (a) comprising 67% by weight of a propylene homopolymer (trade name: NOVATEC PP: MA-8, melting point: 164°C, manufactured by Japan Polypropylene Corporation), 10% by weight of a high density polyethylene (trade name: NOVATEC HD: HJ580, melting point: 134°C, manufactured by Japan Polyethylene Corporation), and 23% by weight of a calcium carbonate powder having an average particle diameter of 1.5 µm was melt-kneaded at 260°C using an extruder, and extruded in a film shape from a die, and the film was cooled to a temperature of about 50°C. The film was again heated to about 140°C, and stretched 5-fold in a longitudinal direction utilizing circumferential speed of rolls. Thus, a monoaxially stretched film becoming a core layer was obtained.

On the other hand, a resin composition (b) comprising 51.5% by weight of a propylene homopolymer (trade name: NOVATEC PP: MA-3, manufactured by Japan Polypropylene Corporation), 3.5% by weight of a high density polyethylene (trade name: NOVATEC HD: HJ580, manufactured by Japan Polyethylene Corporation), 42% by weight of a calcium carbonate powder having an average particle diameter of 1.5 µm, and 3% by weight of a titanium oxide powder having an average particle diameter of 0.8 µm was melt-kneaded at 250°C using other extruder, and extruded on one side of the monoaxially stretched film in a film shape from a die, and laminated thereon. Thus, a laminate of surface layer/core layer (b/a) was obtained.

A resin composition (c) comprising 51.5% by weight of a propylene homopolymer (trade name: NOVATEC PP: MA-3, manufactured by Japan Polypropylene Corporation), 3.5% by weight of a high density polyethylene (trade name: NOVATEC HD: HJ580, manufactured by Japan Polyethylene Corporation), 42% by weight of a calcium carbonate powder having an average particle diameter of 1.5 µm, and 3% by weight of a titanium oxide powder having an average particle diameter of 0.8 µm, and a resin composition (d) comprising 39% by weight of a propylene homopolymer (trade name: NOVATEC PP: FY-4, manufactured by Japan Polypropylene Corporation), 1% by weight of maleic acid-modified polypropylene (trade name: Yumex 1001, manufactured by Sanyo Chemical Industries, Ltd.), and 60% by weight of heavy calcium carbonate (trade name: CALTEX: 7, manufactured by Maruo Calcium Co., Ltd.) were melt-kneaded at 250°C using respective extruders, fed to one co-extrusion die to laminate in the die, extruded in a film shape from the die, and were laminated on the surface at the core layer (a) side of the laminate (b/a) such that the resin composition (d) is an outermost layer. Thus, a laminate (b/a/c/d) with a four-layered structure of surface layer/core layer/back layer/porous printing layer was obtained. The laminate (b/a/c) with a three-layered structure of surface layer/core layer/back layer corresponds to a base layer of the resin film used in the present invention.

The laminate with a four-layered structure was introduced in a tenter oven, heated to 155°C, stretched 5-fold in a lateral direction using a tenter, heat-set at 164°C (annealing), and then cooled to 55°C. After slitting selvages, corona discharge treatment was applied to the laminate in an intensity of 30W/m²/min.

A surface treatment agent (surface treatment agent (a)) comprising an aqueous solution containing 0.3% by weight of polyethyleneimine (trade name: EPOMIN: P-1000, manufactured by Nippon Shokubai Co., Ltd.) was coated on the surface at the porous printing layer side of the resin film in an amount of 0.02 g per unit area (m²), in terms of solid content after drying, using a spray coater. The resin film after coating was dried through a 60°C oven, and finally taken up in a roll form with a winder. Thus, a resin film for ultraviolet curable inkjet printing of Example 1 was obtained. The resin film had a surface opening ratio of the porous printing layer of 15%.

### <Printed matter>

An ink for ultraviolet curable inkjet printing, having a composition of Production Example 1 shown in Table 1 was printed on the porous printing layer (d) of the resin film obtained above in a form of a test pattern containing 50% halftone dots and 100% solid by an ultraviolet curable inkjet printer (trade name: Oce Arizona 250GT, manufactured by Oce). Thus, a printed matter was obtained.

### (Example 2)

A resin film for ultraviolet curable inkjet printing and its printed matter were obtained in the same manners as in Example 1, except that the surface treatment agent was changed to an aqueous solution (surface treatment agent (b)) containing 0.3% by weight of an ethyleneimine adduct of polyamine polyamide (trade name: POLYMIN SK, manufactured by BASF).

### (Example 3)

A resin film for ultraviolet curable inkjet printing and its printed matter were obtained in the same manners as in Example 1, except that the surface treatment agent was changed to an aqueous solution (surface treatment agent (c)) containing 0.3% by weight of an epichlorohydrin adduct of polyamine polyamide (trade name: WS-4024, manufactured by Seiko PMC Corporation).

### (Example 4)

A resin film for ultraviolet curable inkjet printing and its printed matter were obtained in the same manners as in Example 1, except for using a surface treatment agent (surface treatment agent (a+d)) prepared by adding a zwitterionic acrylic copolymer produced by the following production example in combination with the polyethyleneimine used in the surface treatment agent in Example 1 and adjusting so as to contain those in an amount of 0.3% by weight, respectively.

### <Production example of zwitterionic acrylic copolymer>

The following (i) to (iv) were placed in a flask equipped with a nitrogen introduction pipe, a reflux condenser and a stirring machine, and sufficiently mixed. 0.6 part of azobisisobutyronitrile as a polymerization initiator was added, the atmosphere in the system was substituted with nitrogen, the temperature in the system was increased to 80°C, and polymerization was conducted for 3 hours. A solution obtained by dissolving 18.5 parts of sodium monochloroacetate as a quarternizing agent in 20 parts of water was added, and the reaction was conducted at 80°C for 3 hours. Ethyl cellosolve was distilled away while adding dropwise water, and an aqueous solution of a zwitterionic acrylic copolymer having a final solid content concentration of 20% by weight was obtained.

| | |
|---|---|
| (i) Dimethylaminoethyl methacrylate | 40 parts |
| (ii) Methyl methacrylate | 50 parts |
| (iii) 2-Hydroxyethyl methacrylate | 10 parts |
| (iv) Solvent ethyl cellosolve | 100 parts |

### (Example 5)

A resin film for ultraviolet curable inkjet printing and its printed matter were obtained in the same manners as in Example 2, except for using a surface treatment agent (surface treatment agent (b+d)) prepared by adding the zwitterionic acrylic copolymer produced by the above Production Example in combination with the ethyleneimine adduct of polyamine polyamide used in the surface treatment agent in Example 2 and adjusting so as to contain those in an amount of 0.3% by weight, respectively.

### (Example 6)

A resin film for ultraviolet curable inkjet printing and its printed matter were obtained in the same manners as in Example 3, except for using a surface treatment agent (surface treatment agent (c+d)) prepared by adding the zwitterionic acrylic copolymer produced by the above Production Example in combination with the epichlorohydrin adduct of polyamine polyamide used in the surface treatment agent in Example 3 and adjusting so as to contain those in an amount of 0.3% by weight, respectively.

### (Example 7)

A resin film for ultraviolet curable inkjet printing and its printed matter were obtained in the same manners as in Example 1, except the amount of the resin composition (d) added was changed to make a resin composition comprising 24% by weight of a propylene homopolymer (trade name: NOVATEC PP: FY-4, manufactured by Japan Polypropylene Corporation), 1 % by weight of maleic acid-modified polypropylene (trade name: Yumex 1001, manufactured by Sanyo Chemical Industries, Ltd.), and 75% by weight of heavy calcium carbonate (trade name: CALTEX: 7, manufactured by Maruo Calcium Co., Ltd.), and the surface opening ratio of the porous printing layer of the resin film obtained was 27%.

### (Example 8)

A resin film for ultraviolet curable inkjet printing and its printed matter were obtained in the same manners as in Example 1, except the amount of the resin composition (d) added was changed to make a resin composition comprising 49% by weight of a propylene homopolymer (trade name: NOVATEC PP: FY-4, manufactured by Japan Polypropylene Corporation), 1% by weight of maleic acid-modified polypropylene (trade name: Yumex 1001, manufactured by Sanyo Chemical Industries, Ltd.), and 50% by weight of heavy calcium carbonate (trade name: CALTEX: 7, manufactured by Maruo Calcium Co., Ltd,), and the surface opening ratio of the porous printing layer of the resin film obtained was 6.5%.

### (Example 9)

A resin film for ultraviolet curable inkjet printing and its printed matter were obtained in the same manners as in Example 1, except for using the same resin film for ultraviolet curable inkjet printing as in Example 1, and using an ink for ultraviolet curable inkjet printing, having a composition of Production Example 2 shown in Table 1.

### (Comparative Example 1)

A resin film for ultraviolet curable inkjet printing and its printed matter were obtained in the same manners as in Example 1, except the amount of the resin composition (d) added was changed to make a resin composition comprising 14% by weight of a propylene homopolymer (trade name: NOVATEC PP: FY-4, manufactured by Japan Polypropylene Corporation), 1% by weight of maleic acid-modified polypropylene (trade name: Yumex 1001, manufactured by Sanyo Chemical Industries, Ltd.), and 85% by weight of heavy calcium carbonate (trade name: CALTEX: 7, manufactured by Maruo Calcium Co., Ltd.), and the surface opening ratio of the porous printing layer of the resin film obtained was 35%.

### (Comparative Example 2)

A resin film for ultraviolet curable inkjet printing and its printed matter were obtained in the same manners as in Example 1, except the amount of the resin composition (d) added was changed to make a resin composition comprising 54% by weight of a propylene homopolymer (trade name: NOVATEC PP: FY-4, manufactured by Japan Polypropylene Corporation), 1% by weight of maleic acid-modified polypropylene (trade name: Yumex 1001, manufactured by Sanyo Chemical Industries, Ltd.), and 45% by weight of heavy calcium carbonate (trade name: CALTEX: 7, manufactured by Maruo Calcium Co., Ltd.), and the surface opening ratio of the porous printing layer of the resin film obtained was 5%.

### (Comparative Example 3)

A resin film for ultraviolet curable inkjet printing and its printed matter were obtained in the same manners as in Example 1, except for changing the surface treatment agent to pure water (distilled water, indicated as surface treatment agent (e) in Table 2).

### (Comparative Example 4)

A printed matter was obtained in the same manner as in Example 1, except for using the same resin film for ultraviolet curable inkjet printing as used in Example 1 and using an ink for ultraviolet curable inkjet printing, having the composition of Production Example 3 shown in Table 1.

### <Test Examples>

Regarding the resin films for ultraviolet curable inkjet printing, and their printed matters, produced in Examples 1 to 9 and Comparative Examples 1 to 4 above, the following measurement of properties and evaluations were conducted.

### (Surface opening ratio)

A part was optionally cut out of each resin film sample, and stuck to an observation sample table such that a porous printing layer faces an observation surface. Gold was deposited on the observation surface, and pores on the surface were observed at a magnification of 3,000 with an electron microscope (apparatus name: Scanning Electron Microscope: SM-200, manufactured by TOPCON). The region observed was read as image data, the image was subjected to image processing with an image analyzer (apparatus name: Small-Sized General-Purpose Image Analyzer: LUZEX AP, manufactured by Nireco Corporation) to obtain an area ratio of pores, and this was used as a surface opening ratio on the surface of the porous printing layer. The results are shown in Table 2.

### (Viscosity of ink)

Each ink for ultraviolet curable inkjet printing was prepared at 25°C by adding the ink to a 500 ml beaker having a diameter of 91 mm and a height of 117 mm according to JIS K-7117-1 (1999). Viscosity of the ink was measured at 60 rpm for I minute using a viscometer (apparatus name: T-22 Model Spindle type, manufactured by Toki Sangyo Co., Ltd.) and Spindle No. 1. The results are shown in Table 1.

### (Adherability of ink)

According to JIS-K-5600-5-6 (1999), printed surface of each printed matter sample was cross-cut, and was subjected to cross-hatch tape peeling using a cellophane tape (trade name: Cellotape (registered trademark) CT-24, manufactured by Nichiban Co., Ltd.). Thus, an adherability test of an ink was conducted. Area proportion (%) of ink film peeled was visually judged. The results are shown in Table 2 as "Dry".

As water-resistant adherability evaluation of an ink with the assumption that a printed matter is posted outdoors, a printed matter cut into a size of 150 mm × 100 mm was dipped in distilled water adjusted to 33°C for 4 days, water was carefully removed such that there is no problem in evaluation, and ink adherability test by a cross-cut method was conducted in the same manner as above. Area proportion (%) of ink film peeled was visually judged. The results are shown in Table 2 as "After immersing in water",

**TABLE 1**

| Blending Material | | Production Example 1 | Production Example 2 | Production Example 3 |
|---|---|---|---|---|
| Polymerizable monomer | 2-Phenoxyethyl acrylate | 27 parts | 18 parts | 10 parts |
| | N-Vinylcaprolactam | 50 parts | 21 parts | 11 parts |
| | Propoxylated neopentyl glycol diacrylate | 7 parts | 20 parts | 23 parts |
| | Ethoxylated trimethylolpropane triacrylate | 3 parts | 30 parts | 45 parts |
| Photopolymerization initiator | 2-Methyl-1-(4-methylthiophenyl)-2-morpholinopropan-1-one (trade name: IRGACURE 907, manufactured by Ciba Japan) | 3 parts | 3 parts | 3 parts |
| | Bis(2,4,6-trimethylbenzoyl)-phenylphosphine oxide (trade name: IRGACURE 819, manufactured by Ciba Japan) | 5 parts | 5 parts | 5 parts |
| Coloring material | Carbon black | 5 parts | 3 parts | 3 parts |
| Viscosity (unit: mPa·s, at 25°C) | | 10 | 40 | 60 |

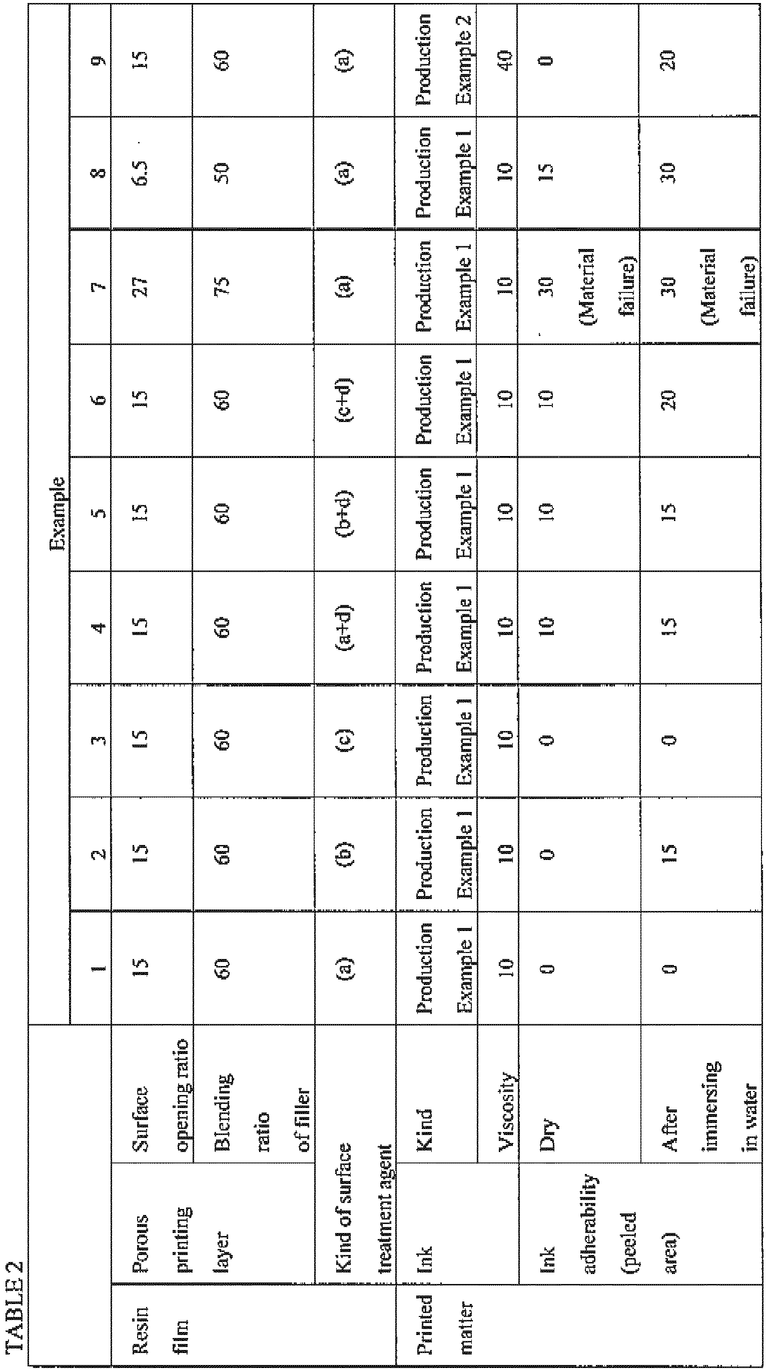

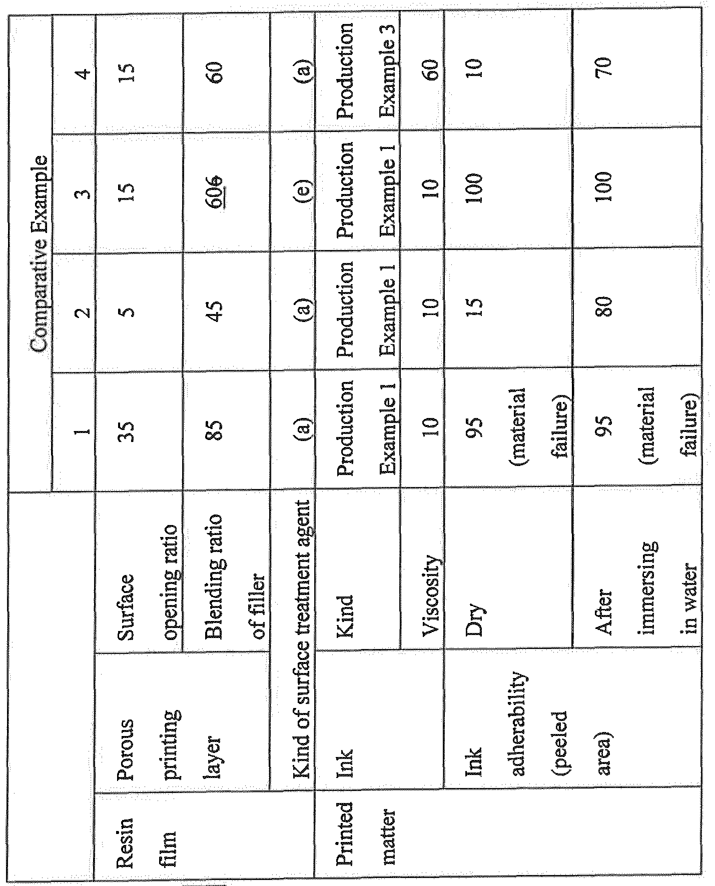

### Industrial Applicability

The present invention makes it possible to obtain a resin film for ultraviolet curable inkjet printing, that can realize uniformly high adhesive force even though various and wide ultraviolet curing inkjet printings are conducted, and its printed matter having excellent water resistance.

The resin film for ultraviolet curable inkjet printing of the present invention has high ink adhesive force, and its printed matter printed by various ultraviolet curable inkjet printers has excellent water resistance. As a result, even through the film is continuously posted outdoors, the ink does not easily peel from the film, and therefore, the film is preferably used.

## Claims

1. A resin film for ultraviolet curable inkjet printing, comprising a porous printing layer and a coating layer on the porous printing layer, wherein the porous printing layer has a surface opening ratio of from 6 to 30%, and the coating layer comprises at least one nitrogen-containing polymer of the following (a) to (c) components.
(a) an ethyleneimine polymer,
(b) a modified ethyleneimine polymer, and
(c) an epichlorohydrin adduct of polyamine polyamide,
wherein the coating dose of the coating layer to the porous printing layer is from 0.01 to 1 g/m², in terms of solid content after drying per unit area m².

2. The resin film for ultraviolet curable inkjet printing according to claim 1, wherein the porous printing layer is a layer containing a thermoplastic resin, and at least one of an inorganic fine powder and an organic filler.

3. The resin film for ultraviolet curable inkjet printing according to claim 2, wherein the thermoplastic resin contained in the porous printing layer is a polyolefin resin.

4. The resin film for ultraviolet curable inkjet printing according to claim 2 or 3, wherein the porous printing layer comprises from 20 to 50% by weight of a polypropylene resin as the thermoplastic resin, and from 50 to 80% by weight of at least one of the inorganic fine powder and the organic filler.

5. The resin film for ultraviolet curable inkjet printing according to any one of claims 1 to 4, wherein the porous printing layer is a resin film stretched in at least uniaxial direction.

6. The resin film for ultraviolet curable inkjet printing according to any one of claims 1 to 5, wherein the coating layer further comprises the following component (d):
(d) a zwitterionic (meth)acrylic copolymer obtained by quarternizing, with a cationization agent, a tertiary nitrogen-containing (meth)acrylic copolymer obtained by copolymerizing the following monomer components (d1) to (d3), 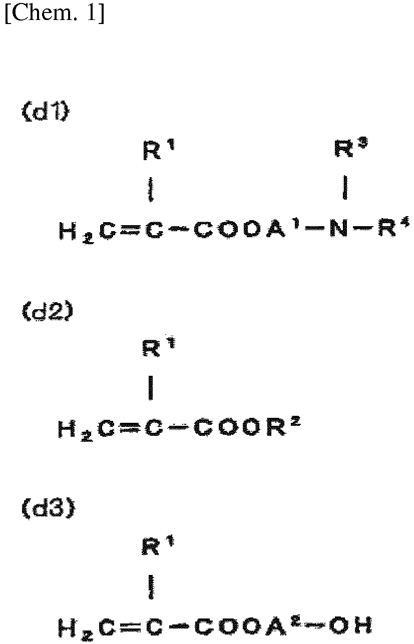 (in the above formula, R¹(s) are the same or different from each other, and represent hydrogen or a methyl group, R² represents an alkyl group having from 1 to 18 carbon atoms, R³ and R⁴ each represents hydrogen or an alkyl group having from 1 to 2 carbon atoms, and A¹ and A² each represents an alkylene group having from 2 to 6 carbon atoms.).

7. A printed matter, which is obtainable by applying an inkjet printing onto the resin film for ultraviolet curable inkjet printing according to any one of claims 1 to 6, by using an ink for ultraviolet curable inkjet printing, the ink having a viscosity of less than 50 mPa·s at 25°C, and then drying and solidifying the ink by an ultraviolet irradiation.

8. The printed matter according to claim 7, wherein the ink for ultraviolet curable inkjet printing contains as a polymerizable monomer, at least one of aliphatic (meth)acrylate, alicyclic (meth)acrylate, aromatic (meth)acrylate, ether (meth)acrylate, (meth)acrylamide and a vinyl compound.

9. The printed matter according to claim 7 or 8, wherein a peeled area of an ink is from 0 to 35% when after dipping the printed matter in a 33°C hot water for 4 days, an adhesion test of the ink is conducted according to JIS K-5600-5-6 (1999).

10. A method of producing a printed matter, which comprises; applying an inkjet printing onto the resin film for ultraviolet curable inkjet printing according to any one of claims 1 to 6, by using an ink for ultraviolet curable inkjet printing, the ink having a viscosity of less than 50 mPa·s at 25°C: and then drying and solidifying the ink by an ultraviolet irradiation.

## Patentansprüche

1. Harzfilm für ultravioletthärtbaren Tintenstrahldruck, umfassend eine poröse Druckschicht und eine Deckschicht auf der porösen Druckschicht, wobei die poröse Druckschicht ein Oberflächenöffnungsverhältnis von 6 bis 30 % hat und die Deckschicht mindestens ein stickstoffhaltiges Polymer der folgenden Komponenten (a) bis (c) umfasst:
(a) ein Ethyleniminpolymer,
(b) ein modifiziertes Ethyleniminpolymer, und
(c) ein Epichlorhydrin-Addukt von Polyamin/Polyamid,
wobei die Deckdosis der Deckschicht zur porösen Druckschicht 0,01 bis 1 g/m² bezogen auf den Feststoffgehalt nach dem Trocknen pro Flächeneinheit m² beträgt.

2. Harzfilm für ultravioletthärtbaren Tintenstrahldruck nach Anspruch 1, wobei es sich bei der porösen Druckschicht um eine Schicht handelt, die ein thermoplastisches Harz und ein anorganisches feines Pulver und/oder einen organischen Füllstoff enthält.

3. Harzfilm für ultravioletthärtbaren Tintenstrahldruck nach Anspruch 2, wobei es sich bei dem in der porösen Druckschicht enthaltenen thermoplastischen Harz um ein Polyolefinharz handelt.

4. Harzfilm für ultravioletthärtbaren Tintenstrahldruck nach Anspruch 2 oder 3, wobei die poröse Druckschicht 20 bis 50 Gew.-% eines Polypropylenharzes als thermoplastisches Harz, und 50 bis 80 Gew.-% des anorganischen feinen Pulvers und/oder organischen Füllstoffs enthält.

5. Harzfilm für ultravioletthärtbaren Tintenstrahldruck nach einem der Ansprüche 1 bis 4, wobei es sich bei der porösen Druckschicht um einen zumindest in uniaxialer Richtung gestreckten Harzfilm handelt.

6. Harzfilm für ultravioletthärtbaren Tintenstrahldruck nach einem der Ansprüche 1 bis 5, wobei die Deckschicht ferner die folgende Komponente (d) umfasst:
(d) ein zwitterionisches (Meth)acrylcopolymer, das durch Quarternisieren eines tertiären stickstoffhaltigen (Meth)acrylcopolymers, das durch Copolymerisieren der folgenden Monomerkomponenten (d1) bis (d3) erhalten ist, mit einem Kationisierungsmittel erhalten ist, 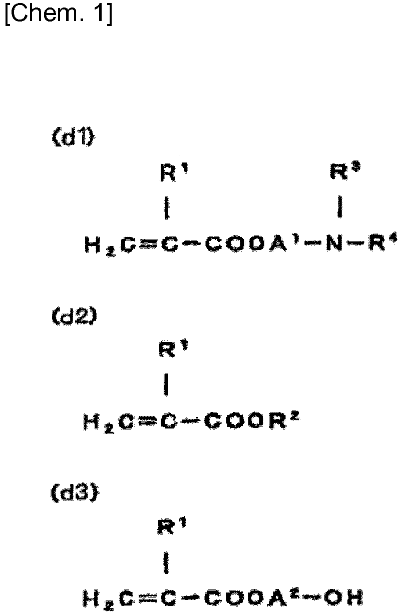 (in der vorstehenden Formel sind R¹(s) identisch oder voneinander verschieden und stellen Wasserstoff und eine Methylgruppe dar, R² stellt eine Alkylgruppe mit 1 bis 18 Kohlenstoffatomen dar, R³ bzw. R⁴ stellt jeweils Wasserstoff oder eine Alkylgruppe mit 1 bis 2 Kohlenstoffatomen dar, und A¹ bzw. A² stellt jeweils eine Alkylengruppe mit 2 bis 6 Kohlenstoffatomen dar).

7. Drucksache, die gewonnen werden kann, indem ein Tintenstrahldruck auf den Harzfilm für ultravioletthärtbaren Tintenstrahldruck nach einem der Ansprüche 1 bis 6 durch Verwendung einer Tinte für ultravioletthärtbaren Tintenstrahldruck aufgebracht wird, wobei die Tinte eine Viskosität von weniger als 50 mPa·s bei 25° C hat, und dann die Tinte durch eine ultraviolette Bestrahlung getrocknet und verfestigt wird.

8. Drucksache nach Anspruch 7, wobei die Tinte für ultravioletthärtbaren Tintenstrahldruck als polymerisierbares Monomer ein aliphatisches (Meth)acrylat, ein alizyklisches (Meth)acrylat, ein aromatisches (Meth)acrylat, Ether(meth)acrylat, (Meth)acrylamin und/oder eine Vinylverbindung enthält.

9. Drucksache nach Anspruch 7 oder 8, wobei eine Ablösefläche einer Tinte 0 bis 35 % beträgt, wenn nach einem Eintauchen der Drucksache in ein 33° C warmes Wasser für 4 Tage, ein Adhäsionstest der Tinte nach JIS K-5600-5-6 (1999) durchgeführt wird.

10. Verfahren zum Herstellen einer Drucksache, das umfasst: Aufbringen eines Tintenstrahldrucks auf den Harzfilm für ultravioletthärtbaren Tintenstrahldruck nach einem der Ansprüche 1 bis 6 durch Verwendung einer Tinte für ultravioletthärtbaren Tintenstrahldruck, wobei die Tinte eine Viskosität von weniger als 50 mPa·s bei 25° C hat, und dann die Tinte durch eine ultraviolette Bestrahlung getrocknet und verfestigt wird.

## Revendications

1. Film de résine pour impression par jet d'encre à séchage sous UV, comprenant une couche d'impression poreuse et une couche de revêtement sur la couche d'impression poreuse, sachant que la couche d'impression poreuse présente un ratio d'ouverture de surface de 6 à 30 %, et la couche de revêtement comprend au moins un polymère azoté des composants (a) à (c) suivants :
(a) un polymère d'éthylèneimine,
(b) un polymère d'éthylèneimine modifié, et
(c) un produit d'addition d'épichlorohydrine polyamine-polyamide,
sachant que le taux de revêtement de la couche de revêtement par rapport à la couche d'impression poreuse est de 0,01 à 1 g/m², en termes de contenu solide après séchage par unité de surface en m².

2. Le film de résine pour impression par jet d'encre à séchage sous UV selon la revendication 1, sachant que la couche d'impression poreuse est une couche contenant une résine thermoplastique, et au moins l'une d'une poudre fine inorganique et d'une charge organique.

3. Le film de résine pour impression par jet d'encre à séchage sous UV selon la revendication 2, sachant que la résine thermoplastique contenue dans la couche d'impression poreuse est une résine de polyoléfine.

4. Le film de résine pour impression par jet d'encre à séchage sous UV selon la revendication 2 ou 3, sachant que la couche d'impression poreuse comprend 20 à 50 % en poids d'une résine de polypropylène en tant que la résine thermoplastique, et 50 à 80 % en poids d'au moins l'une de la poudre fine inorganique et de la charge organique.

5. Le film de résine pour impression par jet d'encre à séchage sous UV selon l'une quelconque des revendications 1 à 4, sachant que la couche d'impression poreuse est un film de résine étiré au moins en direction uniaxiale.

6. Le film de résine pour impression par jet d'encre à séchage sous UV selon l'une quelconque des revendications 1 à 5, sachant que la couche de revêtement comprend en outre le composant (d) suivant :
(d) un copolymère (méth)acrylique zwitterionique obtenu par quaternisation, au moyen d'un agent de cationisation, d'un copolymère (méth)acrylique azoté tertiaire obtenu par copolymérisation des composants monomères (d1) à (d3) suivants, 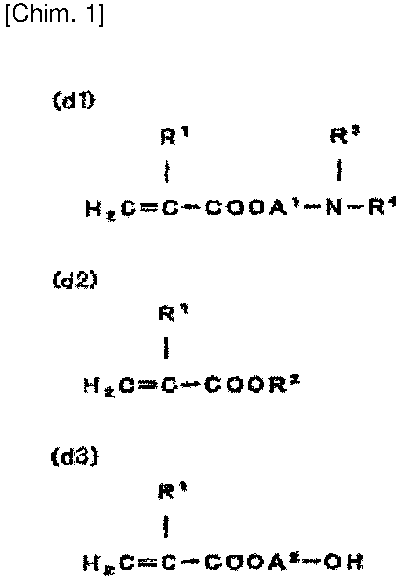 (dans la formule ci-dessus, les R¹ sont identiques les uns aux autres ou différents les uns des autres, et représentent de l'hydrogène ou un groupe méthyle, R² représente un groupe alkyle comportant 1 à 18 atomes de carbone, R³ et R⁴ représentent chacun de l'hydrogène ou un groupe alkyle comportant 1 à 2 atomes de carbone, et A¹ et A² représentent chacun un groupe alkylène comportant 2 à 6 atomes de carbone).

7. Matière imprimée, qui peut être obtenue par application d'une impression par jet d'encre sur le film de résine pour impression par jet d'encre à séchage sous UV selon l'une quelconque des revendications 1 à 6, au moyen d'une encre pour impression par jet d'encre à séchage sous UV, l'encre présentant une viscosité inférieure à 50 mPa·s à 25 °C, puis séchage et solidification de l'encre par rayonnement ultraviolet.

8. La matière imprimée selon la revendication 7, sachant que l'encre pour impression par jet d'encre à séchage sous UV contient, en tant que monomère polymérisable, au moins l'un d'un (méth)acrylate aliphatique, d'un (méth)acrylate alicyclique, d'un (méth)acrylate aromatique, d'un (méth)acrylate d'éther, d'un (méth)acrylamide et d'un composé vinylique.

9. La matière imprimée selon la revendication 7 ou 8, sachant qu'une aire écaillée d'une encre est de 0 à 35 % lorsque, après trempage de la matière imprimée dans une eau chaude à 33 °C pendant 4 jours, un test d'adhésion de l'encre est effectué selon JIS K-5600-5-6 (1999).

10. Procédé de production d'une matière imprimée, qui comprend : l'application d'une impression par jet d'encre sur le film de résine pour impression par jet d'encre à séchage sous UV selon l'une quelconque des revendications 1 à 6, au moyen d'une encre pour impression par jet d'encre à séchage sous UV, l'encre présentant une viscosité inférieure à 50 mPa·s à 25 °C, puis séchage et solidification de l'encre par rayonnement ultraviolet.
